# FASCICULE DE BREVET EUROPEEN

(11) **EP 2 428 675 B1**
(45) Date de publication et mention de la délivrance du brevet: **13.04.2016**
(21) Numéro de dépôt: 11447020.6
(22) Date de dépôt: 07.09.2011
(51) Int. Cl.: F03B 13/08, F03B 13/10

(54) **Installation hydroélectrique et ensemble turbine amovible pour celle-ci**
Hydroelektrische Installation und abnehmbare Turbineneinheit für diese
Hydroelectric facility and removable turbine assembly for the same

(30) Priorité: 08.09.2010 BE 201000533
(43) Date de publication de la demande: 14.03.2012
(73) Titulaire: Rutten Energy, B-4670 Blégny (BE)
(72) Inventeur: Rutten, Jean, B-4670 Mortier (BE)
(74) Mandataire: Powis de Tenbossche, Roland

(56) Documents cités:
- WO-A1-2011/134585
- DE-C- 644 556
- FR-A1- 2 571 101
- FR-E- 69 884
- JP-A- 2006 070 797
- US-A- 4 289 971
- US-A- 4 569 200

## Description

La présente invention a pour objet une installation hydroélectrique comprenant au moins :
- un support principal comportant un système de conduit s'étendant entre une entrée d'eau dans l'installation et une sortie d'eau hors de l'installation;
- une turbine (7) montée sur ledit support principal et présentant un arbre avec un axe autour duquel la turbine est apte à tourner en rotation ;
- un système alternateur - multiplicateur associé audit arbre de la turbine ; et
- un distributeur adapté pour guider l'eau vers la turbine.

Dans les installations hydroélectriques actuelles, un problème important est la maintenance de la turbine, en particulier du multiplicateur de vitesse de celle-ci. Par exemple, dans le cas de turbine du type "bulbe", la maintenance du multiplicateur est particulièrement mal aisée, vu l'accès via un conduit exigu du type cheminée, à la fois pour le personnel et pour le matériel, mais également vu la taille des pièces. La maintenance doit être réalisée après la mise de la turbine à sec, ce qui est difficile à garantir, vu des problèmes de joints, etc., en particulier car la ou les turbines se trouvent sous le niveau amont. La maintenance de telles installations entraîne donc des dangers pour le personnel d'entretien, danger de noyade, danger d'électrocution, danger d'asphyxie, ...
De plus le conduit d'accès à la turbine constitue une perte de charge non négligeable, même si le conduit a un diamètre aussi réduit que possible.

Pour des travaux de maintenance important, il est alors nécessaire d'isoler complètement l'installation pour la mettre complètement à sec, de manière à pouvoir la démonter. Une telle opération est lente et coûteuse, en particulier car elle demande l'arrêt de l'installation pendant une période de temps importante.

On connaît par le document DE644556 une turbine montée dans un élément pivotant dans un corps de vanne, l'élément pivotant comportant la turbine permettant dans une position la coupure du débit La turbine n'est pas montée amovible par rapport au corps de vanne.

Par les documents JP2006 070797 et US 4289971, on connaît un dispositif comprenant une turbine montée à une extrémité d'une conduite. La turbine est attachée à une bride.

Dans le cas du dispositif selon JP2006 070797, des plongeurs sont requis pour "clamer" ou "déclamer" la bride, ceci étant une contrainte importante pour la maintenance de la turbine.

Dans le cas du dispositif selon le brevet US 4289971, il y a lieu également de déboulonner la bride.

Par le document FR2571101, on connaît une méthode de réalisation d'une unité hydroélectrique dont la machine, une fois installée dans le support, est immobilisée par une coulée de béton. Ce n'est qu'après la prise du béton que l'unité hydroélectrique selon ce document est apte à être utilisée, de sorte qu'il est évident que la turbine n'est pas montée mobile dans l'unité hydroélectrique selon ce document.

Le document FR 69884 décrit une installation hydroélectrique comprenant un support en maçonnerie comprenant des articulations sur lesquelles est montée une pièce comprenant la machine hydraulique, un générateur et une trompe d'entonnement. La pièce peut ainsi basculer entre une position de travail et une position relevée.

Le document WO2011/134585 décrit une installation hydroélectrique comprenant un module comportant une paroi amont et une paroi aval entre lesquelles est définie une chambre intermédiaire, l'installation comportant une turbine montée amovible sur la paroi aval pour qu'elle s'étende dans la chambre intermédiaire. Cette chambre intermédiaire présente une section verticale dans le sens du courant d'eau en forme de V. La turbine peut être retirée de la chambre intermédiaire par un engin de levage.

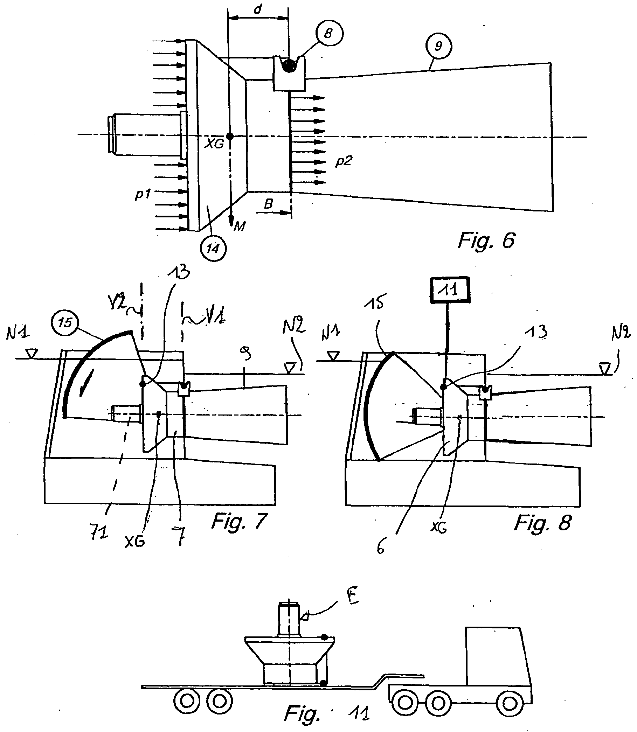

La présente invention vise à remédier ce problème de maintenance, de manière à réduire au maximum le temps d'arrêt de l'installation lors d'une maintenance d'une turbine, tout en assurant une maintenance plus aisée et avec moins de danger de la turbine. De manière particulèrement préférée, une bonne liaison (sensiblement étanche) entre le conduit de sortie ou une face B ou extrémité ouverte de celui-ci et la turbine peut être assurée par la poussée de la turbine sur la face B (voir figure 6) due au couple du poids et/ou due au champ de pression hydraulique, de préférence à la fois par le couple du poids et par le champ de pression hydraulique. Cette liaison au moins sensiblement étanche peut donc être obtenue sans l'intervention de plongeurs.

L'invention a pour objet une installation hydroélectrique comprenant au moins :
- un support principal comportant un système de conduit s'étendant entre une entrée d'eau dans l'installation et une sortie d'eau hors de l'installation;
- une turbine (7) montée sur ledit support principal et présentant un arbre avec un axe autour duquel la turbine est apte à tourner en rotation ;
- un système alternateur - multiplicateur associé audit arbre de la turbine ; et
- un distributeur adapté pour guider l'eau vers la turbine,
dans laquelle le système de conduit s'étendant entre une entrée d'eau dans l'installation et une sortie d'eau hors de l'installation, la turbine et le distributeur étant agencés entre ladite entrée et ladite sortie de manière à ce que de l'eau entrant dans l'installation par la dite entrée et sortant de l'installation par ladite sortie soit guidée et amenée au distributeur et ensuite à la turbine pour la mettre en rotation, et dans laquelle la turbine, le système alternateur - multiplicateur et le distibuteur forment avec une pièce support un ensemble d'un seul tenant montée de manière amovible sur le support principal. Le support principal est adapté pour permettre le retrait dudit ensemble par une opération de levage, qui peut être opérée par un engin de levage mobile, par exemple terrestre, voir porté par une barge ou un bateau.

L'ensemble d'un seul tenant est montée à pivotement sur ledit support principal entre une première position permettant le retrait dudit ensemble hors du support principal et une deuxième position maintenant l'ensemble placé en position de travail de la turbine dans le support principal et s'opposant au retrait dudit ensemble hors dudit support principal.

Selon une forme de réalisation, la pièce support de l'ensemble comprend au moins un moyen adapté, avantageusement au moins deux tourillons adaptés pour coopérer avec un moyen du support principal permettant un pivotement d'au moins 15° (avantageusement entre 20° et 45°) entre une première position permettant le retrait dudit ensemble hors du support principal et une deuxième position maintenant l'ensemble placé en position de travail de la turbine dans le support principal et s'opposant au retrait dudit ensemble hors dudit support principal.

Selon l'invention, l'ensemble comporte des moyens d'accrochage adaptés pour coopérer avec un appareil de levage pour assurer au moins (a) un pivotement de l'ensemble par rapport au support principal et (b) le retrait de l'ensemble hors du support principal, lesdits moyens d'accrochage étant avantageusement montés sur la pièce support.
Selon l'invention, la pièce support de l'ensemble présente un arbre ou des portions coaxiales d'arbre destiné(es) à être placé(es) dans une gorge d'un élément ou d'éléments solidaire(s) du support principal, ledit arbre ou portions d'arbre présentant un axe définissant l'axe de pivotement de l'ensemble par rapport au support principal, ledit axe de pivotement étant perpendiculaire à l'axe de rotation de la turbine. Le ou les moyens d'accrochage est/sont montés sur le distributeur, tandis que l'ensemble présente un centre de gravité, ledit centre de gravité étant situé lorsque la turbine est en position de travail, entre un premier plan vertical passant par l'arbre ou les portions d'arbre de pivotement et un deuxième plan vertical passant par les ou des moyens d'acrrochage et parallèle audit premier plan vertical.
En particulier, le centre de gravité de l'ensemble est situé dans le plan vertical passant par les où des moyens d'accrochage parallèle audit premier plan vertical, après un pivotement d'au moins 15°, avantageusement de 20° à 45°, de l'ensemble autour dudit axe de pivotement par rapport à la position de travail de l'ensemble avec la turbine en position de travail.

Selon une autre particularité, la pièce support de l'ensemble est adaptée pour former un appui dans un plan horizontal, ledit appui étant de plus adapté pour former une cage fermée ou ouverte pour protéger latéralement la turbine.

L'invention a pour objet également l'utilisation d'une installation suivant l'invention pour la production d'énergie hydroélectrique.

L'invention a pour objet également une méthode d'entretien d'une instalation suivant l'invention, dans laquelle pour l'entretien ou la réparation de la turbine on opère avec au moins les étapes suivantes :
- on arrête ou on limite le passage d'eau au travers de la turbine de manière à éviter la mise en rotation de la turbine ;
- on accroche un lien d'un engin de levage audit ensemble comportant la turbine ;
- on actionne ledit engin de levage pour générer un pivotement de l'ensemble autour de l'axe de pivotement;
- on soulève l'ensemble par rapport au support principal de l'installation pour l'amener hors de l'installation pour sa réparation ou son entretien ;
- on lève un ensemble similaire ou l'ensemble après réparation ou entretien, pour l'amener avec l'axe de rotation de la turbine dans une position inclinée par l'axe de la turbine de l'ensemble dans sa position de travail,
- on associe ledit ensemble avec l'axe de rotation en position inclinée, avec le support principal de l'installation, de manière à définir un axe de pivotement pour l'ensemble par rapport audit support principal;
- on abaisse ledit ensemble de manière à générer un pivotement de l'ensemble par rapport au support principal de manière à pivoter l'ensemble avec la turbine en position de travail.

Des particularités et détails de formes de réalisation préférées et revendiquées de l'invention ressortirront de la description suivante, dans laquelle il est fait référence aux dessins ci-annexés.

### Dans ces dessins,

la figure 1 est une vue schématique d'une installation hydroélectrique du type connu,
la figure 2 est une vue d'un ensemble suivant l'invention;
la figure 3 est une autre vue de l'ensemble de la figure 2;
la figure 4 est une vue montrant le placement de l'ensemble de la figure 2 sur un support principal;
la figure 5 montre une opération de levage de l'ensemble de la figure 2;
la figure 6 montre l'ensemble de la figure 2 après son pivotement vers la position de travail de la turbine ;
les figures 7 à 14 montrent des étapes d'une méthode de maintenance selon l'invention.

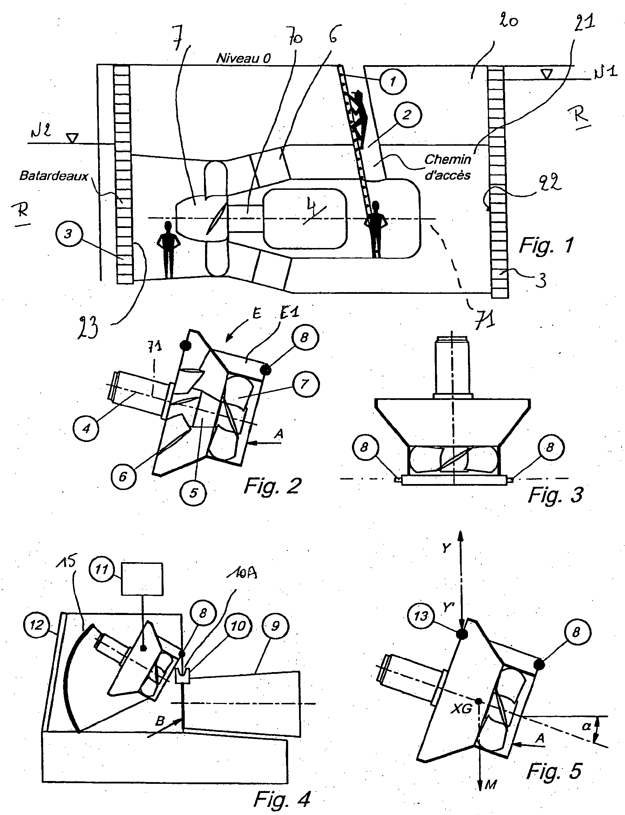

La figure 1 montre une installation hydroélectrique comprenant au moins :
- un support principal 20 comportant un système de conduit 21 s'étendant entre une entrée 22 d'eau dans l'installation et une sortie 23 d'eau hors de l'installation, ce support principal formant dans le cas montré un barrage entre un côté amont (niveau N1) et un côté aval (N2) de la rivière R;
- une turbine (7) montée sur ledit support principal 20 et présentant un arbre 70 avec un axe 71 autour duquel la turbine est apte à tourner en rotation ;
- un système alternateur - multiplicateur 4 associé audit arbre 70 de la turbine ; et
- un distributeur 6 adapté pour guider l'eau vers la turbine.

Dans la figure 1, l'entrée et la sortie 22, 23 du conduit 21 sont obturées par des batardeaux 3, lesdits batardeaux étant utilisés pour isoler le conduit 21 de la rivière pour assurer après pompage de l'eau présente dans le conduit 21, un accès aux hommes de maintenance vers la turbine.

En position d'utilisation et de production d'électricité, les batardeaux ne sont pas présents pour permettre le passage d'eau à travers le conduit et pour assurer la mise en rotation de la turbine 7.

La pose de tels batardeaux 3, et les problèmes d'étanchéité entre les batardeaux et l'installation sont complexes, de sorte que la maintenance d'une telle installation n'est pas aisée.

Le système de conduit s'étend entre une entrée d'eau dans l'installation et une sortie d'eau hors de l'installation, la turbine et le distributeur étant agencés entre ladite entrée 22 (couverture amont) et ladite sortie 23 (ouverture aval) de manière à ce que de l'eau entrant dans l'installation par la dite entrée et sortant de l'installation par ladite sortie soit guidée et amenée au distributeur et ensuite à la turbine pour la mettre en rotation autour de son axe 71.

L'accès à la turbine 7 et au système alternateur - multiplicateur 4 se fait par une cheminée 2 équipée d'une échelle 1 Pour des maintenances importantes, il y a lieu d'isoler complètement l'installation au moyen de batardeaux 3.

Pour permettre une maintenance aisée de la turbine, voire un remplacement d'une turbine usager par une nouvelle turbine, l'invention utilise un ensemble E d'un seul tenant comportant la turbine 7, le système alternateur - multiplicateur 4, le distibuteur 6 et une pièce support E1, ledit ensemble d'un seul tenant E étant montée de manière amovible sur le support principal 20 de l'installation. l'invention permet ainsi de ne pas devoir utiliser de batardeaux pour isoler un conduit par rapport à la rivière.

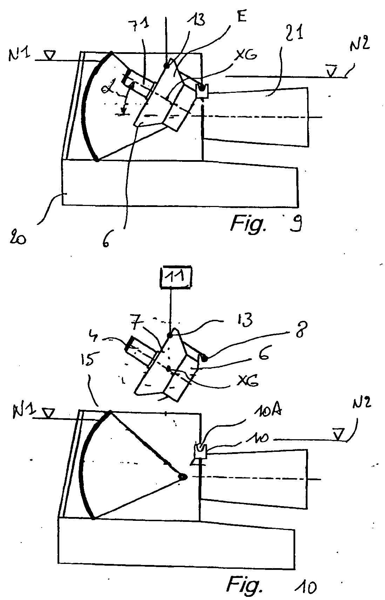

L'ensemble d'un seul tenant E (montré à la figure 2) est apte à être monté à pivotement sur ledit support principal 20 entre une première position (figure 9) permettant le retrait dudit ensemble E hors du support principal et une deuxième position (figure 7) maintenant l'ensemble placé en position de travail de la turbine dans le support principal et s'opposant au retrait dudit ensemble hors dudit support principal. L'angle de pivotement a entre lesdites positions (angle défini entre l'axe 71 de la turbine en position de travail - figure 7 et l'axe 71 de la turbine avec l'ensemble E en position de retrait - figure 9).

La pièce support E1 de l'ensemble E comprend au moins un moyen adapté pour coopérer avec un moyen du support principal permettant un pivotement d'au moins 15°, par exemple de 30° entre une première position permettant le retrait (figure 9) dudit ensemble hors du support principal (20) et une deuxième position (figure 7) maintenant l'ensemble E placé en position de travail de la turbine 7 dans le support principal et s'opposant au retrait dudit ensemble hors dudit support principal.

Des moyens d'accrochage 13 tels que des ouvertures sont présents sur le distributeur 6, ces moyens d'accrochage étant adaptés pour coopérer avec un ou des crochets d'un engin de levage 11.

L'ensemble E présente un centre de gravité XG, ledit centre de gravité XG étant situé lorsque la turbine est en position de travail (figure 7), entre un premier plan vertical V1 passant par l'arbre 8 de pivotement et un deuxième plan vertical V2 passant par les ou des moyens d'acrrochage 13 et parallèle audit premier plan vertical V1.

Le centre de gravité XG de l'ensemble E est situé dans le plan vertical V passant par les ou des moyens d'accrochage 13 parallèle audit premier plan vertical V1, après un pivotement d'au moins 15°, avantageusement de 20° à 45°, de l'ensemble E autour dudit axe de pivotement (axe de l'arbre 8 dans le cas représenté) par rapport à la position de l'ensemble avec la turbine en position de travail (position de l'axe 71 de la turbine sensiblement horizontale).

L'arbre de pivotement 8 présente deux tourillons d'un diamètre adéquat situés avantageusement respectivement à une première extrémité libre de l'arbre et à la deuxième extrémité libre de l'arbre (opposée à ladite première extrémité libre). Ces tourillons sont adaptés pour se positionnner dans deux fourches portées par le support principal 20, par exemple placées de part et d'autre du support principal 20.

En position d'utilisation (figure 6), les champs de pression p1, p2 assurent alors une bonne étanchéité des surfaces en contact de la turbine avec le conduit aspirateur 9.

Puisque le centre de gravité est situé dans la position de retrait de l'ensemble E entre les plans V1 et V3 (plan vertical passant le point d'attache à l'engin de levage 11), dès que les tourillons de l'arbre 8 sont placés dans les fourches du support 20, le poids de l'ensemble créera un couple de pivotement de l'ensemble vers la position de travail de l'ensemble.

La pièce support pour l'ensemble E est adaptée pour former un appui lorsque l'ensemble est placé verticalement (voir figure 3), l'appui présentant alors un plan d'appui horizontal, ledit appui étant de plus adapté pour former une cage fermée ou ouverte pour protéger latéralement la turbine.

Lors du levage de l'ensemble E (flèche Y - voir figure 5), l'ensemble E subira un léger mouvement de pivotement sur lui-même jusqu'à ce que le centre de gravité XG s'étende dans un plan vertical passant par le point d'attache 13 de l'ensemble.

Le moyen de levage 11 peut être une grue, un treuil, etc.

L'installation comporte un conduit "aspirateur" 9 associé à une face d'appui B. La face A de l'ensemble E viendra prendre appui sur la face B lorsque la turbine est en position de fonctionnement. Les faces A et B seront usinées de manière à assurer une bonne étanchéité entre lesdites faces lorsque la turbine est en position de travail. L'étanchéité est assurée par le champ de pression p2 résultant du couple C créé par le poids M de l'ensemble E (le couple C étant égal au produit du poids M par la distance "d" séparant le centre de gravité XG de l'axe de pivotement 8), et par le champ de pression p1 dû aux forces hydrodynamiques sur le distributeur. (voir figures 5 et 6)

L'ensemble ou groupe turbine peut donc être placée sur le support principal de l'installation, sans avoir besoin de boulon, vis ou clame, l'étanchéité sensiblement parfaite étant obtenue par les champs de pression (acier sur acier).

L'installation comporte également une vanne 15 (par exemple une vanne casquette) du côté amont pour contrôler le débit d'eau amenée à la turbine. Cette vanne 15 pivote entre une position ouverte (figure 7) et une position fermée (figure 8). Le degré d'ouverture de la vanne 15 peut être utilisé pour contrôler la quantité d'eau passant dans la turbine.

La figure 7 montre une installation hydroélectrique en mode de fonctionnement, la vanne 15 étant en position ouverte pour permettre à l'eau de passer au travers du distributeur pour être amené à la turbine 7. La niveau d'eau en amont N1 est supérieur à celui de la turbine, tandis que le niveau aval N2 (inférieur au niveau amont N1) est supérieur au niveau de l'aspirateur 9. La différence de niveaux entre le niveau amont N1 et le niveau aval N2 est par exemple de 1 m à 6 m.

Pour la maintenance ou la réparation de la turbine 7, on ferme la vanne 15, en abaissant celle-ci (Figure 8). A ce moment, le niveau d'eau dans la turbine correspond au niveau aval N2. La vanne 15 est amenée en position fermée par pivotement.

On accroche le crochet d'un engin de levage 11 au distributeur 6, et on tire vers le haut le distributeur. Par cette opération, l'ensemble E pivote autour de l'axe de l'arbre 8.

On amène ainsi l'ensemble dans un position permettant le décrochage de l'arbre 8 hors de la gorge 10, sans que l'ensemble ne vienne toucher la vanne 15 en position fermée. (figure 9) Cette position est avantageusement une position pour laquelle le centre de gravité XG se trouve dans le plan vertical parallèle à l'axe de l'arbre et dans lequel s'étend le câble de levage. Ensuite l'ensemble E peut être levé (figure 10), l'arbre 8 sortant de la gorge 10A.

Au cas où l'ensemble E ne serait pas dans cette position de la figure 9, lors du levage de l'ensemble, l'ensemble E peut pivoter légèrement jusqu'à ce que le centre de gravité XG se trouve dans le plan vertical parallèle à l'axe de l'arbre et dans lequel s'étend le câble de levage, au cas ou l'ensemble E ne serait pas dans cette position.

On dépose alors l'ensemble E sur la remorque d'un camion pour permettre son transport vers un atelier de maintenance et de réparation (Figure 11).

Pour limiter le temps de non fonctionnement de l'installation, on amène un ensemble avec une turbine révisée sur le site de l'installation, au moment du retrait de la turbine à envoyer à la maintenance. Ceci permet également de ne déplacer qu'une seule fois l'engin de levage, et de l'utiliser pendant un temps très court.

On amène le nouvel ensemble E au moyen de l'engin de levage 11, de manière à ce que l'arbre soit situé au-dessus de la gorge 10A.

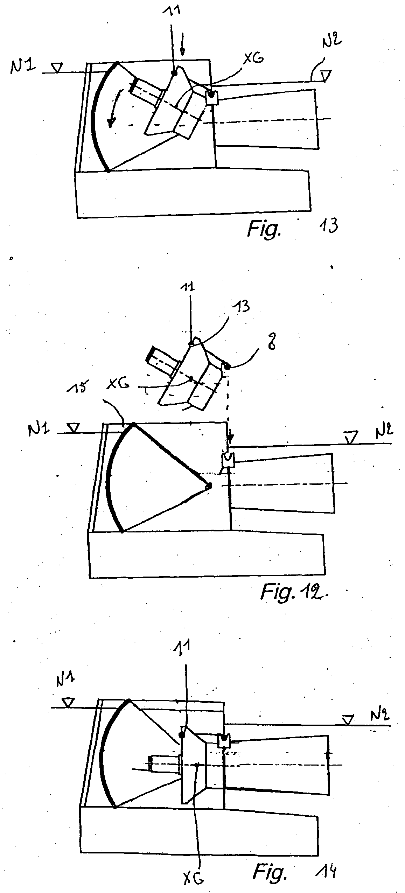

On abaisse l'ensemble pour que les deux tourillons de l'arbre rentrent chacun dans une gorge 10 d'une des fourches du support 20 (figures 12 et 13).

On continue à abaisser le câble de l'engin de levage, ce qui génère une rotation de l'ensemble E par rapport à l'axe de l'arbre. L'ensemble ne peut alors plus bouger verticalement (figure 14). On retire le crochet de l'engin de levage.

On ouvre la vanne 15 pour entraîner à nouveau la turbine 7. On se retrouve alors dans la position de départ de la figure 7.

L'invention est particulièrement intéressante pour les centrales électriques de basse chute, par exemple avec un ΔH (différence entre le niveau amont N1 et le niveau aval N2) allant de 1,5 m à 4 m, mais utilisant de gros débits, par exemple de plus de 100m³/s, par exemple de 100m³/s à 150m³/s, voire plus. L'installation comprend souvent une série de turbines placées en parallèle, chaque turbine étant avantageusement conçue pour ces petits ΔH pour absorber un débit de 10m³/s à 20m³/s. L'installation comprendra ainsi par exemple de 4 à 10 turbines, en fonction du débit moyen d'eau turbinable.

Lors d'une opération de maintenance d'une turbine, on abaisse la vanne casquette 15 amenant l'eau vers la turbine dont la maintenance est désirée, les autres turbines restant en fonctionnement.

En utilisant un groupe ou ensemble turbine de réserve, il est possible alors d'opérer un remplacement standard rapide, de sorte que la production électrique serait quasi identique, ne subissant qu'une légère réduction de puissance au moment du remplacement.

L'ensemble ou groupe turbine amovible sera avantageusement adapté pour permettre un transport par camion ne nécessitant pas des autorisations particulières.

## Revendications

1. Installation hydroélectrique comprenant au moins :
- un support principal (20) comportant un système de conduit s'étendant entre une entrée d'eau dans l'installation et une sortie d'eau hors de l'installation;
- une turbine (7) montée sur ledit support principal (20) et présentant un arbre avec un axe autour duquel la turbine est apte à tourner en rotation ;
- un système alternateur - multiplicateur (4) associé audit arbre de la turbine ; et
- un distributeur (6) adapté pour guider l'eau vers la turbine,
dans laquelle le système de conduit s'étend entre une entrée d'eau dans l'installation et une sortie d'eau hors de l'installation, la turbine et le distributeur étant agencés entre ladite entrée (22) et ladite sortie (23) de manière à ce que de l'eau entrant dans l'installation par ladite entrée et sortant de l'installation par ladite sortie soit guidée et amenée au distributeur (6) et ensuite à la turbine (7) pour la mettre en rotation,
dans laquelle la turbine (7), le système alternateur - multiplicateur (4) et le distibuteur (6) forment avec une pièce support (E1) un ensemble (E) d'un seul tenant montée a) de manière amovible sur le support principal (20) et b) à pivotement sur ledit support principal (20) entre une première position permettant le retrait dudit ensemble hors du support principal (20) et une deuxième position maintenant l'ensemble (E) placé en position de travail de la turbine (7) dans le support principal et s'opposant au retrait dudit ensemble hors dudit support principal,
dans lequel l'ensemble comporte des moyens d'accrochage (13) adaptés pour coopérer avec un appareil de levage (11) pour assurer au moins (a) un pivotement de l'ensemble par rapport au support principal et (b) le retrait de l'ensemble hors du support principal, lesdits moyens d'accrochage étant avantageusement montés sur la pièce support (E1),
**caractérisée en ce que** la pièce support (E1) de l'ensemble présente un arbre (8) ou des portions coaxiales d'arbre destiné(es) à être placé(es) dans une gorge (10A) d'un élément (10) ou d'éléments solidaire(s) du support principal (20), ledit arbre (8) ou portions d'arbre présentant un axe définissant l'axe de pivotement de l'ensemble par rapport au support principal, ledit axe de pivotement s'étendant perpendiculairement à l'axe de rotation de la turbine (7),
**en ce que** le ou les moyens d'accrochage (13) est/sont montés sur le distributeur ou sur la pièce support (E1) au niveau du distributeur (6), et
**en ce que** l'ensemble présente un centre de gravité (XG), ledit centre de gravité étant situé lorsque la turbine (7) est en position de travail, entre un premier plan vertical (V1) passant par l'arbre (8) ou les portions d'arbre de pivotement et un deuxième plan vertical (V2) passant par les ou des moyens d'accrochage et parallèle audit premier plan vertical.

2. Installation suivant la revendication précédente, **caractérisée en ce que** le centre de gravité (XG) de l'ensemble est situé dans le plan vertical (V) passant par les ou des moyens d'accrochage (13) parallèle audit premier plan vertical (V1), après un pivotement d'au moins 15°, avantageusement de 20° à 45°, de l'ensemble (E) autour dudit axe de pivotement par rapport à la position de travail de l'ensemble avec la turbine en position de travail.

3. Installation suivant l'une quelconque des revendications précédentes, **caractérisée en ce que** la pièce support (E1) de l'ensemble comprend au moins deux tourillons adaptés pour coopérer avec un moyen (10A) du support principal (20) permettant un pivotement d'au moins 15° entre une première position permettant le retrait dudit ensemble hors du support principal (20) et une deuxième position maintenant l'ensemble (E) placé en position de travail de la turbine dans le support principal et s'opposant au retrait dudit ensemble hors dudit support principal.

4. Installation suivant l'une quelconque des revendications précédentes, **caractérisée en ce que** la pièce support (E1) de l'ensemble est adaptée pour former un appui dans un plan horizontal, ledit appui étant de plus adapté pour former une cage fermée ou ouverte pour protéger latéralement la turbine.

5. Ensemble amovible pour une installation suivant l'une quelconque des revendications précédentes, ledit ensemble présentant un moyen de fixation rapide sur le support principal (20) de l'installation.

6. Utilisation d'une installation suivant l'une quelconque des revendications précédentes pour la production d'énergie hydroélectrique.

7. Méthode d'entretien d'une installation suivant l'une quelconque des revendications 1 à 4, dans laquelle pour l'entretien ou la réparation de la turbine on opère avec au moins les étapes suivantes :
- on arrête où on limite le passage d'eau au travers de la turbine de manière à éviter la mise en rotation de la turbine ;
- on accroche un lien d'un engin de levage audit ensemble comportant la turbine ;
- on actionne ledit engin de levage pour générer un pivotement de l'ensemble autour de l'axe de pivotement;
- on soulève l'ensemble par rapport au support principal de l'installation pour l'amener hors de l'installation pour sa réparation ou son entretien ;
- on lève un ensemble similaire ou l'ensemble après réparation ou entretien, pour l'amener avec l'axe de rotation de la turbine dans une position inclinée par l'axe de la turbine de l'ensemble dans sa position de travail,
- on associe ledit ensemble avec l'axe de rotation en position inclinée, avec le support principal de l'installation, de manière à définir un axe de pivotement pour l'ensemble par rapport audit support principal;
- on abaisse ledit ensemble de manière à générer un pivotement de l'ensemble par rapport au support principal de manière à pivoter l'ensemble avec la turbine en position de travail.

## Patentansprüche

1. Hydroelektrische Anlage, die wenigstens umfasst:
- einen Hauptträger (20), der ein Leitungssystem enthält, das sich zwischen einem Wassereinlass in die Anlage und einem Wasserauslass aus der Anlage erstreckt;
- eine Turbine (7), die an dem Hauptträger (20) montiert ist und eine Welle mit einer Achse, um die sich die Turbine drehen kann, aufweist;
- ein Wechselstromgenerator/Getriebe-System (4), das mit der Welle der Turbine verbunden ist; und
- einen Verteiler (6), der dafür ausgelegt ist, Wasser zu der Turbine zu leiten,
wobei das Leitungssystem zwischen einem Wassereinlass in die Anlage und einem Wasserauslass aus der Anlage verläuft, wobei die Turbine und der Verteiler zwischen dem Eingang (22) und dem Ausgang (23) in der Weise angeordnet sind, dass Wasser, das durch den Einlass in die Anlage eintritt und die Anlage durch den Auslass verlässt, zu dem Verteiler (6) und anschließend zu der Turbine (7) geleitet wird, um diese in Drehung zu versetzen,
wobei die Turbine (7), das Wechselstromgenerator/Getriebe-System (4) und der Verteiler (6) mit einem Tragteil (E1) eine einteilige Anordnung (E) bilden, die a) abnehmbar an dem Hauptträger (20) und b) schwenkbar an dem Hauptträger (20) zwischen einer ersten Position, die das Zurückziehen der Anordnung von dem Hauptträger (20) ermöglicht, und einer zweiten Position, die die Anordnung (E) in der Arbeitsposition der Turbine (7) in dem Hauptträger hält und dem Zurückziehen der Anordnung von dem Hauptträger entgegenwirkt, montiert ist,
wobei die Anordnung Einhakmittel (13) umfasst, die dafür ausgelegt sind, mit einer Hebevorrichtung (11) zusammenzuwirken, um wenigstens (a) eine Schwenkung der Anordnung in Bezug auf den Hauptträger und (b) das Zurückziehen der Anordnung von dem Hauptträger sicherzustellen, wobei die Einhakmittel vorteilhaft an dem Tragteil (E1) montiert sind,
**dadurch gekennzeichnet, dass** das Tragteil (E1) der Anordnung eine Welle (8) oder koaxiale Wellenabschnitte, die dazu bestimmt sind, in einer Kehle (10A) eines oder mehrerer Elemente, die mit dem Hauptträger (20) fest verbunden sind, angeordnet zu werden, aufweist, wobei die Welle (8) oder Wellenabschnitte eine Achse aufweisen, die eine Schwenkachse der Anordnung in Bezug auf den Hauptträger definiert, wobei sich die Schwenkachse senkrecht zu der Drehachse der Turbine (7) erstreckt,
dass das oder die Einhakmittel (13) an dem Verteiler oder an dem Tragteil (E1) auf Höhe des Verteilers (6) montiert sind und
dass die Anordnung einen Schwerpunkt (XG) aufweist, wobei sich der Schwerpunkt dann, wenn die Turbine (7) in der Arbeitsposition ist, zwischen einer ersten vertikalen Ebene (V1), die durch die Schwenkwelle (8) oder die Schwenkwellenabschnitte verläuft, und einer zweiten vertikalen Ebene (V2), die durch die Einhakmittel verläuft und zu der ersten vertikalen Ebene parallel ist, befindet.

2. Anlage nach dem vorhergehenden Anspruch, **dadurch gekennzeichnet, dass** sich der Schwerpunkt (XG) der Anordnung in der vertikalen Ebene (V), die durch die Einhakmittel (13) verläuft und zu der ersten vertikalen Ebene (V1) parallel ist, befindet, nachdem die Anordnung (E) eine Schwenkung um wenigstens 15°, vorteilhaft eine Schwenkung im Bereich von 20° bis 45°, um die Schwenkachse in Bezug auf die Arbeitsposition der Anordnung ausgeführt hat, wenn die Turbine in der Arbeitsposition ist.

3. Anlage nach einem der vorhergehenden Ansprüche, **dadurch gekennzeichnet, dass** das Tragteil (E1) der Anordnung wenigstens zwei Drehzapfen umfasst, die dafür ausgelegt sind, mit einem Mittel (10A) des Hauptträgers (20) zusammenzuwirken, was eine Schwenkung um wenigstens 15° zwischen einer ersten Position, die das Zurückziehen der Anordnung von dem Hauptträger (20) ermöglicht, und einer zweiten Position, die die Anordnung (E) angeordnet in der Arbeitsposition der Turbine in dem Hauptträger hält und dem Zurückziehen der Anordnung von dem Hauptträger entgegenwirkt, ermöglicht.

4. Anlage nach einem der vorhergehenden Ansprüche, **dadurch gekennzeichnet, dass** das Tragteil (E1) der Anordnung dafür ausgelegt ist, eine Abstützung in einer horizontalen Ebene zu bilden, wobei die Abstützung außerdem dafür ausgelegt ist, einen geschlossenen oder offenen Käfig zu bilden, um die Turbine seitlich zu schützen.

5. Abnehmbare Anordnung für eine Anlage nach einem der vorhergehenden Ansprüche, wobei die Anordnung ein Mittel zum schnellen Befestigen an dem Hauptträger (20) der Anlage aufweist.

6. Verwendung einer Anlage nach einem der vorhergehenden Ansprüche für die Erzeugung von hydroelektrischer Energie.

7. Verfahren zum Warten einer Anlage nach einem der Ansprüche 1 bis 4, wobei für die Wartung oder die Reparatur der Turbine wenigstens die folgenden Schritte ausgeführt werden:
- Anhalten oder Begrenzen des Durchgangs von Wasser durch die Turbine, derart, dass vermieden wird, die Turbine in Drehung zu versetzen;
- Einhaken eines Verbindungsteils einer Hebemaschine an der Anordnung, die die Turbine enthält;
- Betätigen der Hebemaschine, um eine Schwenkung der Anordnung um die Schwenkachse zu erzeugen;
- Anheben der Anordnung in Bezug auf den Hauptträger der Anlage, um sie für ihre Reparatur oder ihre Wartung aus der Anlage zu führen;
- Aufnehmen einer ähnlichen Anordnung oder dieser Anordnung nach der Reparatur oder der Wartung, um sie dann, wenn die Drehachse der Turbine in einer geneigten Position ist, längs der Achse der Turbine der Anordnung in ihre Arbeitsposition zu führen,
- Verbinden der Anordnung, die die in der geneigten Position befindliche Drehachse hat, mit dem Hauptträger der Anlage in der Weise, dass eine Schwenkachse für die Anordnung in Bezug auf den Hauptträger definiert wird;
- Absenken der Anordnung in der Weise, dass eine Schwenkung der Anordnung in Bezug auf den Hauptträger in der Weise erzeugt wird, dass die Anordnung mit der Turbine in der Arbeitsposition schwenkt.

## Claims

1. Hydroelectric facility comprising at least:
- a main support (20) including a pipe system extending between a water inlet coming into the facility and a water outlet going out of the facility;
- a turbine (7) mounted on this main support (20) and having a shaft with an axis, around which the turbine is able to rotate;
- an alternator - multiplier system (4) associated with this shaft of the turbine; and
- a distributor (6) suitable for guiding the water towards the turbine,
in which the pipe system extends between a water inlet coming into the facility and a water outlet going out of the facility, the turbine and the distributor being arranged between this inlet (22) and this outlet (23) so that the water coming into the facility through this inlet and going out of the facility through this outlet is guided and taken to the distributor (6) and then the turbine (7) in order to rotate it,
in which the turbine (7), the alternator - multiplier system (4) and the distributor (6) form a unit (E) with a support part (E1) in one piece mounted a) in a removable way on the main support (20) and b) pivoting on this main support (20) between a first position allowing this unit to be removed from the main support (20) and a second position keeping the unit (E) in place in the working position of the turbine (7) in the main support and stopping this unit from being removed from the main support,
in which the unit includes means of attachment (13) suitable for working with a lifting device (11) to ensure at least (a) pivoting of the unit in relation to the main support and (b) removal of the unit from the main support, these means of attachment advantageously being mounted on the support part (E1),
**characterised in that** this support part (E1) of the unit has a shaft (8) or coaxial shaft portions intended to be placed in a groove (10A) of an element (10) or elements that is/are integral with the main support (20), this shaft (8) or coaxial shaft portions having an axis defining the pivoting axis of the unit in relation to the main support, this pivoting axis extending perpendicularly to the axis of rotation of the turbine (7),
in which the means of attachment (13) is/are mounted on the distributor or on the support part (E1) at the level of the distributor (6), and
in which the unit has a centre of gravity (XG), when the turbine (7) is in the working position this centre of gravity being situated between a first vertical plane (V1) passing through the shaft (8) or pivoting shaft portions and a second vertical plane (V2) passing through the means of attachment and parallel to this first vertical plane.

2. Facility according to the previous claim, **characterised in that** the centre of gravity (XG) of the unit is situated in the vertical plane (V) passing through the means of attachment (13) parallel to this first vertical plane (V1), after pivoting the unit (E) by at least 15°, advantageously 20° to 45°, around this pivoting axis in relation to the working position of the unit with the turbine in the working position.

3. Facility according to any one of the previous claims, **characterised in that** the support part (E1) of the unit comprises at least two pivot pins suitable for working together with a means (10A) of the main support (20) allowing pivoting of at least 15° between a first position allowing this unit to be removed from the main support (20) and a second position keeping the unit (E) in place in the working position of the turbine in the main support and stopping this unit from being removed from this main support.

4. Facility according to any one of the previous claims, **characterised in that** the support part (E1) of the unit is suitable for forming a support in a horizontal plane, this support also being suitable for forming a closed or open cage to protect the turbine laterally.

5. Removable unit for a facility according to any one of the previous claims, this unit having a means of rapid fixing on the main support (20) of the facility.

6. Use of a facility according to any one of the previous claims for producing hydroelectric power.

7. Method for maintenance of a facility according to any one of claims 1 to 4, in which the operation for maintenance or repair of the turbine involves at least the following stages:
- the passage of water through the turbine is stopped or limited in order to prevent the turbine rotating;
- a tie from a lifting device is attached to this unit including the turbine;
- this lifting device is operated in order to cause the unit to pivot around the pivoting axis;
- the unit is lifted in relation to the main support of the facility in order to take it out of the
- facility to repair or maintain it;
- a similar unit or the unit that has been repaired or maintained is lifted to take it with the axis of rotation of the turbine in an inclined position in relation to the axis of the turbine of the unit in its working position,
- this unit with the axis of rotation in an inclined position is associated with the main support of the facility in order to define a pivoting axis for the unit in relation to this main support;
- this unit is lowered in order to cause the unit to pivot in relation to the main support in order to pivot the unit with the turbine in the working position.
